# EUROPÄISCHE PATENTSCHRIFT

(11) **EP 3 537 177 B1**
(45) Veröffentlichungstag und Bekanntmachung des Hinweises auf die Patenterteilung: **18.02.2026**
(21) Anmeldenummer: 18191720.4
(22) Anmeldetag: 30.08.2018
(51) Int. Cl.: G01S 15/93, B06B 1/02, G01S 7/524

(54) **VORRICHTUNG UND VERFAHREN ZUR ÜBERTRAGERFREIEN ANSTEUERUNG EINES ULTRASCHALLTRANSDUCERS**
DEVICE AND METHOD FOR TRANSDUCER-FREE CONTROL OF AN ULTRASONIC TRANSDUCER
DISPOSITIF ET PROCÉDÉ DE COMMANDE SANS TRANSFORMATEUR D'UN TRANSDUCTEUR ULTRASONORE

(30) Priorität: 07.03.2018 DE 102018105284; 07.03.2018 DE 102018105283
(43) Veröffentlichungstag der Anmeldung: 11.09.2019
(73) Patentinhaber: Elmos Semiconductor SE, 51379 Leverkusen (DE)
(72) Erfinder: Friemann, Uwe, 44227 Dortmund (DE); Kapoor, Niron, 44227 Dortmund (DE)
(74) Vertreter: dompatent

(56) Entgegenhaltungen:
- EP-A1- 2 312 572
- EP-A1- 2 743 725
- US-A1- 2010 242 611

## Beschreibung

Im Zuge der Entwicklung von Fahrerassistenzsystemen zum autonomen Fahren sind Sensorsysteme zur Detektion der Fahrzeugumgebungssituation von besonderer Wichtigkeit. Ultraschallsensoren werden schon heute für die Erstellung sogenannter Umgebungskarten genutzt. Ein immer wieder auftretendes Problem ist der Wunsch nach einer Maximierung der Reichweite bei gleichzeitig niedrigen Kosten. In der Vergangenheit wurden zur Ansteuerung der PiezoSchwinger von Ultraschall-Transducern Übertrager (Transformatoren) eingesetzt. Auf diese soll jedoch aus Kostengründen verzichtet werden. Dies hat im Stand der Technik eine Begrenzung der Amplitude der Spannung der Transducer-Schwingung an den Transducer-Anschlüssen auf das doppelte der Betriebsspannung zur Folge, wobei hier unter Betriebsspannung die Versorgungsspannung der Ausgangstreiberstufe verstanden wird. Diese wiederum kann mit einer Ladungspumpe oder ähnlichen Verfahren deutlich über die am Eingang des Systems angelegte Spannung hinausgehen.

### Stand der Technik

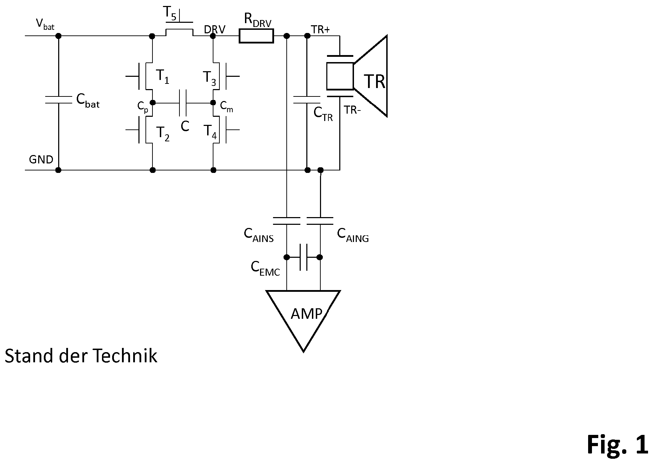

Der Stand der Technik wird anhand von Fig. 1 erläutert. Fig. 1 zeigt schematisch und vereinfacht die Treiberstufe für einen Ultraschall-Transducer aus dem Stand der Technik. Da die Erfindung sich nur mit dem Antrieb des piezoelektrischen Schwingelements eines Transducers befasst, gilt das Folgende auch für Ultraschallsender mit einem piezoelektrischen Schwingelement.

Die Betriebsspannung (V_{bat}) wird über einen Stützkondensator (C_{bat}) stabilisiert, der typischerweise relativ groß gewählt ist.

In einer Ansteuerphase wird der Transducer (TR) angetrieben.

In einer ersten Phase der Ansteuerphase wird hierfür der fünfte Transistor (T₅) durchgeschaltet. Der positive Anschluss (TR+) des Transducers (TR) wird dann in dieser ersten Phase über den Treiberausgangswiderstand (R_{DRV}) mit der Betriebsspannung (V_{bat}) verbunden. Gleichzeitig werden der erste Transistor (T₁) und der vierte Transistor (T₄) durchgeschaltet. Hierdurch wird die Treiberkapazität (C) mit ihrem ersten Anschluss (Cₚ) mit der Betriebsspannung (V_{bat}) und mit ihrem zweiten Anschluss (Cₘ) mit dem Bezugspotenzial (GND) verbunden. Der dritte Transistor (T₃) und der zweite Transistor (T₂) sind in dieser ersten Phase gesperrt.

In einer zweiten Phase der Ansteuerphase werden der fünfte Transistor (T₅), der erste Transistor (T₁) und der vierte Transistor (T₄) gesperrt. Stattdessen werden in dieser zweiten Phase der zweite Transistor (T₂) und der dritte Transistor (T₃) durchgeschaltet. Hierdurch wird die zuvor auf die Betriebsspannung (V_{bat}) aufgeladene Treiberkapazität (C) mit ihrem ersten Anschluss (Cₚ) mit dem Bezugspotenzial (GND) verbunden und mit Ihrem zweiten Anschluss (Cₘ) mit dem Treiberausgang (DRV) verbunden. Der Treiberausgang vollführt hierdurch einen Spannungssprung um das doppelte des Betrags der Spannung der Betriebsspannung (V_{bat}) unter das Bezugspotenzials (GND).

Die ersten und zweiten Phasen der Ansteuerphasen wechseln sich nun bevorzugt mit der Resonanzfrequenz der Transducer-Schaltung, bestehend aus dem Treiberausgangswiderstand (R_{DRV}), der Transducer-Kapazität (C_{TR}) und dem Transducer (TR) ab. Hierdurch wird das piezoelektrische Schwingelement des Transducers (TR) in Schwingungen versetzt.

Nach der Ansteuerphase folgt die Empfangsphase. Hierbei werden zumindest der fünfte Transistor (T₅) und der dritte Transistor (T₃) gesperrt. Hierdurch wird keine elektrische Energie mehr auf den Transducer (TR) übertragen. Ein Nachteil der Schaltung der Fig. 1 ist, dass die maximale Amplitude der Betriebsspannung des Transducers an dem positiven Transducer-Anschluss (TR+) und an dem negativen Transducer-Anschluss (TR-) auf das Doppelte des Betrags der Betriebsspannung (V_{bat}) begrenzt ist.

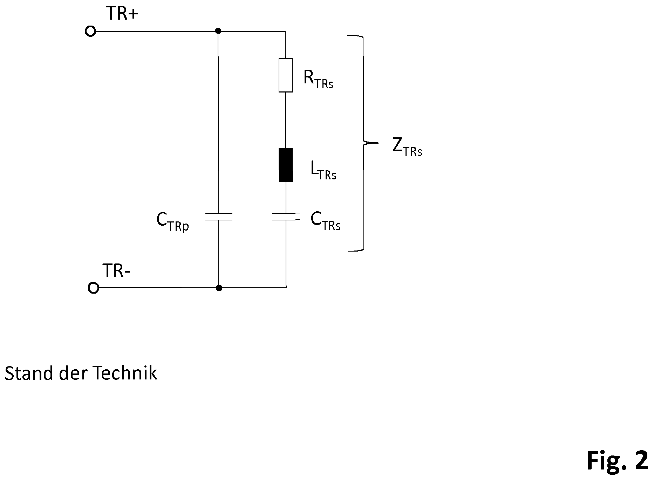

Fig. 2 zeigt ein aus dem Stand der Technik bekanntes Ersatzschaltbild für einen Ultraschall-Transducer (TR). Das Ersatzschaltbild weist eine Parallelkapazität (CTRₚ), einen Serienwiderstand (R_{TRs}), eine Serienkapazität (C_{TRs}) und eine Serieninduktivität (L_{TRs}) auf. Der Ultraschall-Transducer wird über einen positiven Anschluss (TR+) und einen negativen Anschluss (TR-) angeschlossen. Die Bezeichnungen "positiver Anschluss (TR+)" und "negativer Anschluss (TR-)" dienen hier nur der besseren Orientierung und haben keinen physikalischen Hintergrund.

In EP-A-2 743 725 ist eine Ultraschallvorrichtung beschrieben, bei der der Ultraschall-Transducer mittels eines Übertragers angesteuert wird.

In EP-A-2 312 572 ist eine elektrische Schaltung zur Anpassung der Impedanz eines Generators zur Erzeugung der Ultraschallschwingungen eines Ultraschallwandlers an die Impedanz eines piezoelektrischen Schwingelements im Ultraschallwandler beschrieben. In dieser Schrift bleibt unerwähnt, ob zum Betreiben des Ultraschallwandlers ein Übertrager eingesetzt wird oder nicht.

Schließlich zeigt US-A-2010/0242611 einen Ultraschallsensor mit zwei Schwingkreisen, die überkritisch gekoppelt sind (siehe z.B. Fig. 6B dieser Schrift).

### Aufgabe der Erfindung

Der Erfindung liegt die Aufgabe zugrunde, eine Lösung zu schaffen, die den obigen Nachteil des Stands der Technik nicht aufweist und weitere Vorteile aufweist.

### Lösung der Aufgabe

Diese Aufgabe wird durch eine Einrichtung mit einem übertragungsfreien Ultraschall-Transducer gelöst, dessen Ersatzschaltbild eine Serienschaltung aus einer Serieninduktivität und einer Serienkapazität und eine zur Serienschaltung parallel geschaltete Parallelkapazität aufweist, wobei die Einrichtung ferner versehen ist mit den Merkmalen des Anspruchs 1. Der Gegenstand des Anspruchs 2 betrifft eine bevorzugte Ausgestaltung der Erfindung.

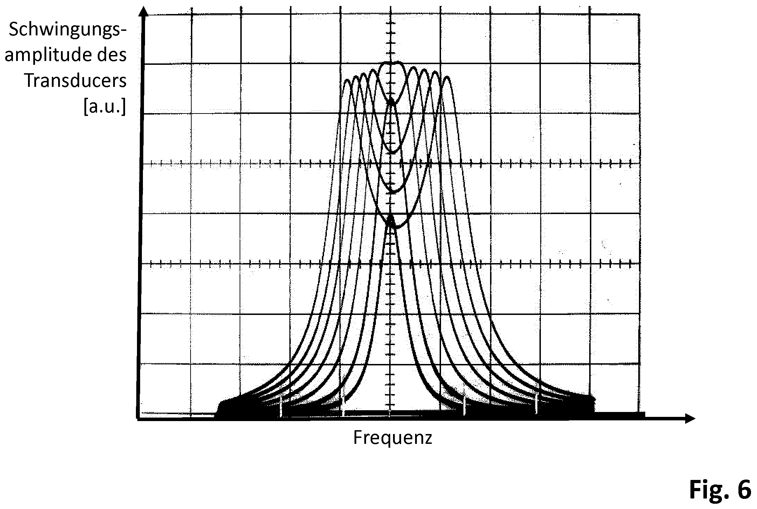

Erfindungsgemäß wird der Wert der Treiberausgangsimpedanz durch entsprechende Wahl der Treiberausgangsinduktivität der Treiberausgangsimpedanz, die gegebenenfalls auch noch eine Treiberausgangskapazität aufweisen kann, entsprechend gewählt, so dass die beiden zuvor genannten Schwingkreise kritisch gekoppelt sind (was weiter unten im Zusammenhang mit der Fig. 6 erläutert wird).

Ferner wird die obige Aufgabe gelöst durch die Verwendung der vorgenannten Einrichtung, wobei vorgesehen ist, dass der Transducer (TR) nach dem Ende einer Ansteuerphase mit einer Wechselspannung zwischen dem positiven Anschluss (TR+) des Transducers (TR) und dem negativen Anschluss (TR-) des Transducers (TR) betrieben wird, die einen Spitze-zu-Spitze-Wert aufweist, der zu Beginn der Ausschwingphase des Transducers (TR) betragsmäßig mehr als das doppelte des Betrags der Betriebsspannung (V_{bat}) der Vorrichtung zum Betreiben des Transducers (TR) beträgt.

Bei einer Betriebsschaltung der eingangs beschriebenen Art wird die Aufgabe nun dadurch gelöst, dass eine Ausgangsinduktivität (V_{DRV}) in die Anschlussleitung des Transducers (TR) eingefügt wird.

Im Rahmen der Erfindung wurde erkannt, dass das schwingfähige System dritter Ordnung, das durch den Treiberausgangswiderstand (R_{DRV}), die Transducer-Kapazität (C_{TR}) und den Transducer gebildet wird, für den Betrieb ungünstig ist und dass es zwar komplexer, aber günstiger ist, ein schwingfähiges System vierter Ordnung zu verwenden.

Der Transducer in der Schaltung nach Fig. 1 kann, wie bereits beschrieben, durch ein Ersatzschaltbild aus einer Serienschaltung aus einer Serienkapazität (C_{TRs}), einer Serieninduktivität (L_{TRs}) und einem Serienwiderstand (R_{TRs}) mit einer zu dieser Serienschaltung parallel geschalteten Parallelkapazität (C_{TRp}) dargestellt werden. Der Serienwiderstand (R_{TRs}) repräsentiert die mechanischen Verluste und die akustische Abstrahlung des Transducers (TR). Die Spannung über diesem Serienwiderstand (Rₛ) soll zur Maximierung der Reichweite einer Ultraschall-Einparkhilfe maximiert werden. Die Parallelkapazität (C_{TRp}) wird typischerweise durch die transducerexterne Transducer-Kapazität (C_{TR}) dominiert. Somit verfügt der Transducer (TR) über eine Serien-und eine Parallelresonanz. Die Serienresonanz wird durch den Serienschwingkreis aus Serienkapazität (C_{TRs}) und Serieninduktivität (L_{TRs}) und in geringem Maße durch den Serienwiderstand (R_{TRs}) und damit die Schallabstrahlung bestimmt. Erfindungsgemäß wird nun durch einen weiteren Energiespeicher im Übertragungssystem eine weitere Polstelle erzeugt. Hierfür wurde erkannt, dass es günstig ist, in Serie zu dem Treiberausgangswiderstand (R_{DRV}) eine zusätzliche Ausgangsinduktivität (L_{DRV}) einzufügen. Diese Ausgangsinduktivität (L_{DRV}) bildet mit der Transducer-Kapazität (C_{TR}) einen zweiten Serienschwingkreis. An die Ausgangsinduktivität (L_{DRV}) ist vermittels des positiven Transducer-Anschlusses (TR+) der Serienschwingkreis des Transducers (TR) angeschlossen (Zur Vereinfachung sei hier davon ausgegangen, dass die Transducer-Kapazität (C_{TR}) und die Parallelkapazität (C_{TRp}) des Transducers (TR) durch die Transducer-Kapazität (C_{TR}) gut abgebildet werden). Ggf. ist hier also der Begriff Transducer-Kapazität (C_{TR}) durch die Parallelschaltung aus Transducer-Kapazität (C_{TR}) und Parallelkapazität (C_{TRp}) des Transducers (TR) zu ersetzen. Es wird aber ferner davon ausgegangen, dass die Transducer-Kapazität (C_{TR}) wesentlich größer ist als die Parallelkapazität (C_{TRp}) des Transducers (TR).

Die Ausgangsinduktivität (LDRV), die Transducer-Kapazität (C_{TR}), die Serienkapazität des Transducers (TR) und die Serieninduktivität des Transducers (TR) bilden somit ein schwingfähiges System vierter Ordnung.

Es wurde im Rahmen der Erfindung erkannt, dass bei dem schwingfähigen System vierter Ordnung je nach Wahl der Komponenten
1. Ausgangsinduktivität (L_{DRV}),
2. Transducer-Kapazität (C_{TR}),
3. Serienkapazität des Transducers (TR) und
4. Serieninduktivität des Transducers (TR)
die folgenden drei Szenarien gegeben sein können:
a. Die Serienschwingkreise des Systems können unterkritisch gekoppelt sein.
b. Die Serienschwingkreise des Systems können überkritisch gekoppelt sein.
c. Die Serienschwingkreise des Systems können kritisch gekoppelt sein.

Sämtliche drei Begriffe entstammen der Beschreibung induktiv gekoppelter Schwingkreise in der Hochfrequenztechnik. Bei einer unterkritischen Kopplung ist der normierte Kopplungsfaktor < 1, bei überkritischer Kopplung ist er > 1 und bei kritischer Kopplung beträgt der normierte Kopplungsfaktor 1. Der normierte Kopplungsfaktor ist gleich dem Quotienten aus Kopplungsfaktor und Dämpfung. Der Kopplungsfaktor beschreibt, wie stark zwei Schwingkreise induktiv gekoppelt sind.

Es wurde erkannt, dass für das System eine unterkritische Kopplung nicht optimal ist, weil dann die Bandbreite des Systems zu groß wird und dadurch zu viel Rauschen durch das System aufgenommen wird.

Es wurde des Weiteren erkannt, dass für das System eine überkritische Kopplung ebenfalls nicht optimal ist, weil dann im Arbeitsfrequenzbereich eine Dämpfung einsetzt und somit die maximale Schwingungsamplitude des Transducers reduziert wird und damit auch die Reichweite einer ultraschallbasierten Einparkhilfe reduziert wird.

Es wurde des Weiteren erkannt, dass für das System eine kritische Kopplung optimal ist, weil dann die Schwingkreise die optimale Bandbreite haben.

Die Ausgangsinduktivität (L_{DRV}) muss somit eine definierte Induktivität und Güte haben, die diesen Fall kritischer Kopplung hervorruft.

Die Ausgangsinduktivität (L_{DRV}) zeichnet sich somit dadurch aus, dass sie zusammen mit der Transducer-Kapazität (C_{TR}) einen Serienschwingkreis bildet.

Da es sich um ein System vierter Ordnung handelt, wird empfohlen, die Polstellen durch eine geeignete numerische Näherung in Abhängigkeit zu bestimmen.

Der Bereich kritischer Kopplung ist dabei ein Arbeitspunkt, der infolge von Fertigungstoleranzen der verschiedenen Komponenten nie ganz exakt getroffen werden kann. Daher sollte die Resonanzfrequenz der Serienresonanz des Transducers (TR) nie mehr als 3dB neben dem Maximum der frequenzabhängigen Impedanz aus Ausgangsinduktivität (L_{DRV}), Transducer-Kapazität (C_{TR}) plus Parallelkapazität (C_{TRp}) des Transducers (TR), Serienkapazität des Transducers (TR) und Serieninduktivität des Transducers (TR) liegen. Die Transducer (TR) haben eine Frequenzbandbreite von typischerweise +/- 1 kHz. Diese Transducer-Frequenzen sollen somit bevorzugt um nicht mehr als 3dB vom Optimum in der zu erwartenden Schwingungsamplitude abweichen. Über den Treiberausgangswiderstand (R_{DRV}) wird bevorzugt die Bandbreite und über die Ausgangsinduktivität (L_{DRV}) die Frequenz der Schwingung eingestellt.

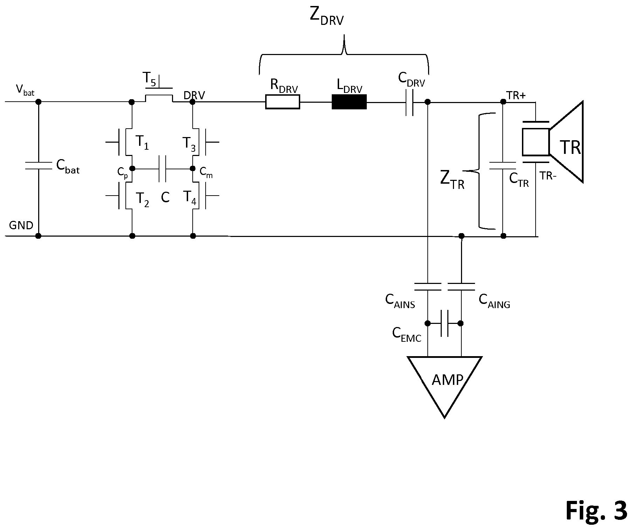

Es wird somit eine Betriebsschaltung für einen Ultraschall-Transducer (TR) vorgeschlagen, die eine Ansteuer- bzw. Treiberschaltung, hier beispielhaft bestehend aus dem Stützkondensator (C_{bat}), den Transistoren (T₁, T₂, T₃, T₄, T₅), und eine zum Transducer (TR) parallelgeschaltete Transducer-Kapazität (C_{TR}) aufweist. Die Ansteuerschaltung weist des Weiteren einen ersten Anschluss (GND) und einen zweiten Anschluss (DRV) auf. Die Ansteuerschaltung weist einen Treiberausgangswiderstand (R_{DRV}) auf. Dieser Treiberausgangswiderstand (R_{DRV}) ist in den Fign. 1 und 3 diskret eingezeichnet. Die parasitären Widerstände der Transistoren können aber zu dem Wert dieses Treiberausgangswiderstands (R_{DRV}) beitragen. Der Treiberausgangswiderstand (R_{DRV}) kann daher auch ganz oder teilweise durch den Ausgangswiderstand der Ansteuerschaltung an ihrem zweiten Ausgang (DRV) realisiert sein. Auch können die Innenwiderstände der Transistoren, also der Ausgangswiderstand der Ansteuerschaltung, durch einen zusätzlichen Treiberausgangswiderstand, der in Serie zu dem zweiten Ausgang (DRV) der Ansteuerschaltung geschaltet ist, zum eigentlichen Treiberausgangswiderstand (R_{DRV}) ergänzt werden. Die Fign. 1 und 3 sind also insofern als vereinfachte symbolhafte Darstellungen zu verstehen, um das Wirkprinzip der Erfindung zu verdeutlichen.

Die Transducer-Kapazität (C_{TR}) kann durch die in dem Transducer (TR) vorhandene Kapazität gebildet werden und muss nicht als diskretes Element in der Schaltung vorhanden sein. Die Fign. 1 und 3 sind also insofern als vereinfachte symbolhafte Darstellungen zu verstehen, um das Wirkprinzip der Erfindung zu verdeutlichen.

Ein positiver Anschluss (TR+) des Transducers (TR) ist so mit dem zweiten Anschluss (DRV) der Ansteuerschaltung verbunden, dass der Treiberausgangswiderstand (R_{DRV}) wirkmäßig als zwischen dem positiven Anschluss (TR+) des Transducers (TR) und dem zweiten Anschluss (DRV) der Ansteuerschaltung geschaltet betrachtet werden kann. Ein negativer Anschluss (TR-) des Transducers (TR) ist dabei mit dem ersten Anschluss (GND) der Ansteuerschaltung verbunden.

Es ist erfindungsgemäß, dass eine (Treiber-)Ausgangsinduktivität (L_{DRV}) wirkmäßig als zwischen dem positiven Anschluss (TR+) des Transducers (TR) und dem zweiten Anschluss (DRV) der Ansteuerschaltung in Serie mit dem Treiberausgangswiderstand (R_{DRV}) geschaltet betrachtet werden kann. Des Weiteren ist nach der Erfindung vorgesehen, dass der Wert der Ausgangsinduktivität (L_{DRV}) so bemessen ist, dass die beiden Serienschwingkreise kritisch gekoppelt sind. Hiermit ist einerseits als erster Schwingkreis der Serienschwingkreis aus Serieninduktivität des Ersatzschaltbilds des Transducers (TR) und Serienkapazität des Ersatzschaltbilds des Transducers (TR) gemeint und andererseits als zweiter Schwingkreis der Serienschwingkreis aus Ausgangsinduktivität (L_{DRV}) und der Parallelschaltung aus Transducer-Kapazität (C_{TR}) und Parallelkapazität (C_{TRp}) des Ersatzschaltbilds des Transducers (TR) gemeint, die kritisch miteinander gekoppelt sind.

Der Begriff "kritische Kopplung" wurde oben mit einer Frequenzabweichung von weniger als +/-3dB hinsichtlich der Änderung der Impedanz erläutert. Liegt eine Schaltung in diesem Bereich, so ist sie im Sinne der Erfindung kritisch gekoppelt.

Besonders hervorzuheben ist, dass die Betriebsschaltung dazu vorgesehen werden kann, nach dem Ende einer Ansteuerphase den Transducer zwischen seinem positiven Anschluss (TR+) und seinem negativen Anschluss (TR-) mit einer Wechselspannungsamplitude zu betreiben, die einen Spitze-zu-Spitze-Wert aufweist, der zu Beginn der Ausschwingphase im zeitlichen Anschluss an die Ansteuerphase des Transducers (TR) betragsmäßig mehr als das doppelte des Betrags der Spannung der Betriebsspannung (V_{bat}) gegen ein Bezugspotenzial (GND) beträgt.

Die bevorzugte Betriebsschaltung für einen Transducer (TR) weist also einen kapazitiven Energiespeicher (C_{TR}) und einen induktiven Energiespeicher (L_{DRV}) auf, um diesen Pegel erzeugen zu können.

Dieser Betriebsschaltung entspricht ein Verfahren zum Betreiben eines Transducers (TR) mit den folgenden Schritten:
- Bereitstellen eines Transducers (TR),
- Koppeln des Transducers (TR) mit der Mittenanzapfung (TR+) eines Serienschwingkreises aus einer Ausgangsinduktivität (L_{DRV}) und einer Transducer-Kapazität (C_{TR}) und mit einem Bezugspotenzial (GND), wobei der Serienschwingkreis (L_{DRV}, C_{TR}) ebenfalls mit dem Bezugspotenzial gekoppelt ist,
- Wahl des Werts der Ausgangsinduktivität (L_{DRV}) und des Werts der Transducer-Kapazität (C_{TR}) in der Art, dass die Kopplung zwischen einerseits dem Serienresonanzkreis des Transducers (TR), bestehend aus dessen Serieninduktivität und dessen Serienkapazität und andererseits dem Serienresonanzkreis bestehend aus der Ausgangsinduktivität (L_{DRV}) und der Parallelschaltung aus Transducer-Kapazität (C_{TR}) und Parallelkapazität (C_{TRp}) des Transducers (TR) kritisch ist,
- Ansteuerung der beiden gekoppelten Serienresonanzkreise mit einer Wechselspannung, wobei die Spitze-zu-Spitze Spannung der zur Ansteuerung genutzten Wechselspannung in zumindest einem Zeitraum kleiner ist als die messbare Wechselspannung zwischen einem ersten Anschluss (TR+) und einem zweiten Anschluss (TR-) des Transducers (TR).

### Vorteil

Kern der Erfindung ist die Ansteuerung eines Ultraschallsenders (ggf. gekoppelt auch mit Empfangsfunktion, wie es bei einem Ultraschall-Transducer der Fall ist) mittels mindestens zweier kritisch gekoppelte LC-Schwingkreise. Der eine LC-Schwingkreis wird durch die parasitären Komponenten (L_{TRs}) und (C_{TRs}) des Ultraschall-Senders realisiert. Das Ersatzschaltbild des Ultraschall-Senders weist eine Reihenschaltung aus einer Induktivität, einer Kapazität und einem Widerstand auf, parallel zu der eine weitere Kapazität (C_{TRp}) liegt. In der Zuleitung zum Ultraschall-Sender wird dann eine Treiberausgangsinduktivität (L_{DRV}) eingebracht, so dass sich zwei gekoppelte LC-Schwingkreise ergeben. Diese werden kritisch gekoppelt, was bedeutet, dass der Frequenzgang im Bereich seines Maximums verbreitert ist und ein Plateau aufweist.

Aufgrund der kritischen Kopplung kommt es zu einer Amplitudenverstärkung und damit zu einer Ansteuerung des Ultraschall-Senders mit höherer Energie und damit mit dem Ergebnis, dass die Reichweite vergrößert wird. Genau das soll auf einfache Art und Weise erreicht werden, was mit der Erfindung tatsächlich gelingt.

Durch die vorgeschlagene Betriebsschaltung werden Schwingungspegel oberhalb des doppelten Betriebsspannungspegels möglich, ohne auf einen Übertrager zurückgreifen zu müssen. Die Vorteile sind hierauf aber nicht beschränkt.

Die Erfindung wird nachfolgend anhand mehrerer Ausführungsbeispiele und unter Bezugnahme auf die Zeichnung näher erläutert. Im Einzelnen zeigen dabei:
- Fig. 1: den Stand der Technik der Beschaltung eines Ultraschall-Transducers,
- Fig. 2: das Ersatzschaltbild eines Ultraschall-Transducers,
- Fig. 3: eine erfindungsgemäße Ergänzungsbeschaltung eines Ultraschall-Transducers,
- Fig. 4: eine alternative Ergänzungsbeschaltung eines Ultraschall-Transducers,
- Fig. 5: eine vereinfachte Darstellung der Ergänzungsbeschaltung nach Fig. 4 und
- Fign. 6 bis 9: verschiedene Signalverläufe.

### Beschreibung der Ausführungsbeispiele

Die wesentliche Erkenntnis der Erfindung ist darin zu sehen, die Treiberausgangsimpedanz Z_{DRV}, die einen ohmschen Anteil R_{DRV}, einen induktiven Anteil L_{DRV} und gegebenenfalls einen kapazitiven Anteil C_{DRV} aufweist (siehe die Schaltung in Fig. 3), auf die Transducer-Impedanz Z_{TR} abzustimmen. Die Transducer-Impedanz Z_{TR} setzt sich zusammen aus der Impedanz Z_{TRs} des Serienschwingkreises des Ersatzschaltbildes des Transducers mit R_{TRs}, C_{TRs} und L_{TRs} des Transducers, der Parallelkapazität C_{TRp} des Ersatzschaltbildes des Transducers und einer externen, mit den Anschlüssen Tr+ und Tr- des Transducers verbundenen weiteren Parallelkapazität C_{TR}. Die Abstimmung bzw. Anpassung beider Schwingkreise erfolgt dergestalt, dass die beiden Schwingkreise kritisch gekoppelt sind. Dazu wird z.B. die Treiberausgangsinduktivität

L_{DRV} entsprechend gewählt, da typischerweise die Transducer-Impedanz durch die Hardware des Transducers gegeben ist. Durch die kritische Kopplung wird die in den Transducerserienwiderstand R_{TRs} eingebrachte und damit von diesem abgegebene Wirkleistung optimiert.

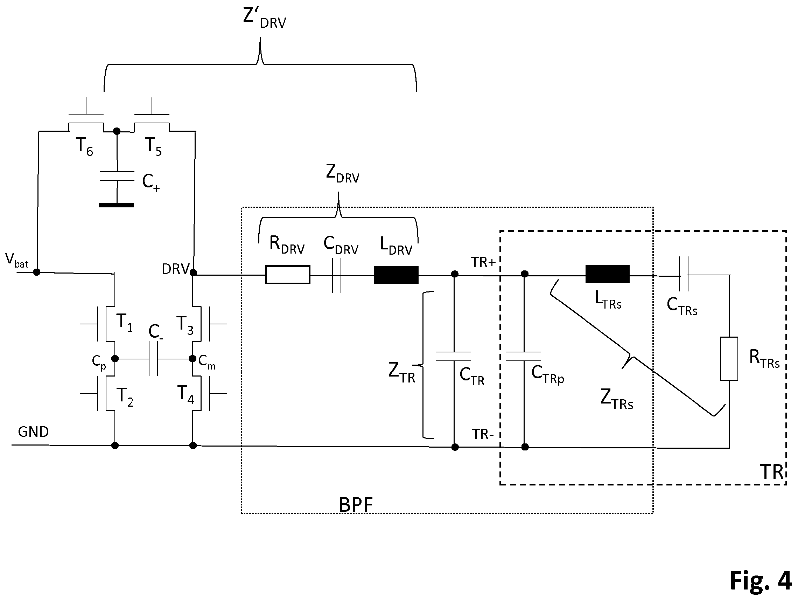

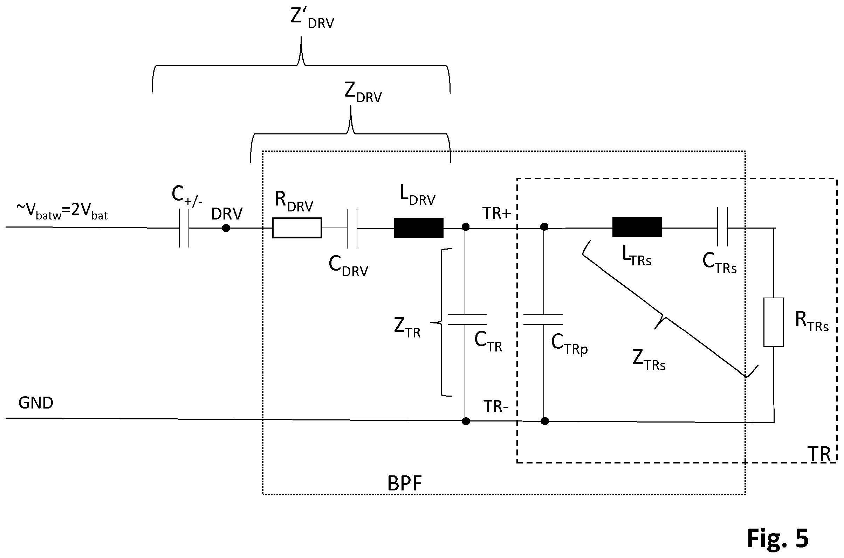

In den Fign. 4 und 5 ist eine Variante der Schaltung nach Fig. 3 gezeigt, bei der zur Maximierung der Wirkleistung in dem Transducerserienwiderstand R_{TRs} die Brückentreiberschaltung (Treiberstufe TS) sowohl in der positiven Halbwelle der Ansteuerung als auch in deren negativer Halbwelle den gleichen Innenwiderstand aufweist, um die Energieübertragung auf den Transducer zu maximieren, da dann eine optimale Widerstandsanpassung durch geeignete Wahl des Netzwerkes erreicht werden kann. Der Messschaltungsteil der Schaltung nach Fig. 3 ist in den Fign. 4 und 5 nicht gezeigt. Der Transducer TR bildet zusammen mit der Impedanz Z_{TR} einen Bandpass BPF.

Die Beeinflussung der Kopplung beider Schwingkreise, nämlich des durch die Treiberausgangsimpedanz Z_{DRV} repräsentierten Treiberausgangs-Schwingkreises und des durch den Transducer gegebenen Schwingkreises (repräsentiert durch Z_{TR}) wurde im Rahmen der Erfindung für eine Beispielbetrachtung simuliert, da numerische Betrachtungen auf Grund der Komplexität der Berechnung quasi ausscheiden. Bei gleichbleibenden Bauteilen der Schwingkreise wurde die Treiberausgangsinduktivität L_{DRV} variiert. Fig. 6 zeigt die Ergebnisse bei verschieden groß gewählter Treiberausgangsinduktivität L_{DRV}. Die beiden kleineren mittleren Kurven zeigen einen Verlauf, bei dem die Energieübertragung innerhalb einer recht kleinen Bandbreite ein absolutes Maximum aufweist. Es handelt sich um den Fall der unterkritischen Kopplung der beiden Schwingkreise. Die vier äußeren Kurven zeigen in der Mitte einer größeren Bandbreite ein Minimum, was den Fall einer überkritischen Kopplung repräsentiert. Die obere mittlere Kurve zeigt das Ergebnis der kritischen Kopplung, die sich durch ein Plateau (angenähert) über eine mittlere Bandbreite auszeichnet. Durch Veränderung der Kapazität C_{TR} kann hier noch eine Optimierung im Sinne einer Anpassung des Energieeintrags über eine größere Bandbreite erzielt werden.

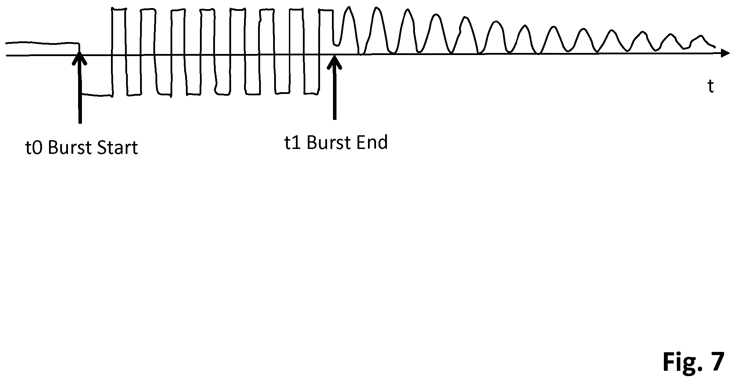

Fig. 7 zeigt den Spannungsverlauf an einem Ultraschall-Transducer zwischen dem positiven Anschluss TR+ des Transducers TR und dem negativen Anschluss TR- des Transducers TR- aus dem Stand der Technik während eines sogenannten Burst-Pulses. Gut zu erkennen sind, dass, und wie die Ansteuerphase in der der Transducer TR mit dem Rechtecksignal angeregt wird, und das anschließende Ausschwingen.

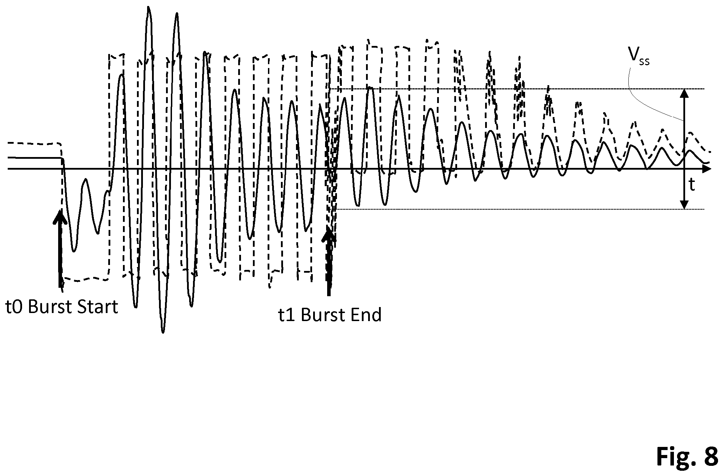

Fig. 8 zeigt das Ausschwingen des Transducers TR in der gleichen Schaltung wie die der Fig. 7 mit dem Unterschied, dass nun entsprechend dem Unterschied zwischen Fig. 1 und Fig. 3 eine Ausgangsinduktivität L_{DRV} in die Zuleitung des Transducers TR eingefügt wurde und dass deren Wert so bestimmt wurde, dass die Kopplung zwischen dem Serienresonanzkreis aus Serienkapazität C_{TRs} und Serieninduktivität L_{TRs} des Transducers TR einerseits und dem Serienresonanzkries aus Ausgangsinduktivität LDRV und Transducer-Kapazität C_{TR} und Parallelkapazität C_{TRp} des Transducers TR anderseits kritisch ist. In dem beispielhaften Versuchsaufbau, bei dem diese Schwingungen aufgezeichnet wurden, wurde ein Spitze-Spitze-Wert V_{SS} von 31,4V (Fig. 3) gemessen, was signifikant über der 12V des Aufbaus der Fig. 7 (Fig. 1) liegt. Die entsprechenden Spannungspegel der Spitzenwerte sind wieder als gestrichelte Linien eingezeichnet.

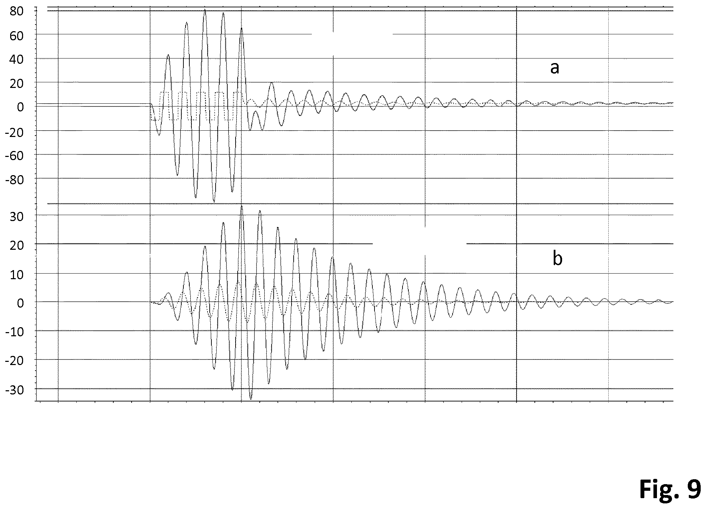

Fig. 9 zeigt die Verhältnisse besonders gut.

In Fig. 9a ist die Spannung am Transducer TR zwischen positivem Transducer-Anschluss TR+ und negativem Transducer-Anschluss TR- (gestrichelt gezeichnet) gegen das Bezugspotenzial GND für den Fall ohne zusätzliche Ausgangsinduktivität L_{DRV} dargestellt. In Fig. 9a ist außerdem die Spannung am Transducer TR zwischen positivem Transducer-Anschluss TR+ und negativem Transducer-Anschluss TR- (durchgezogen gezeichnet) gegen das Bezugspotenzial GND für den Fall MIT zusätzlicher Ausgangsinduktivität L_{DRV} dargestellt.

In Fig. 9b ist der akustische Impuls dargestellt, der sich innerhalb des elektrischen Transducer-Modells (Fig. 2) als Spannung über dem Serienwiderstand R_{TRs} darstellen lässt. Es handelt sich um Simulationskurven. Gestrichelt ist wieder der Pegel ohne Ausgangsinduktivität L_{DRV} dargestellt, durchgezogen der Pegel mit Ausgangsinduktivität L_{DRV}. Bei optimalen Verhältnissen ergibt sich ein Verhältnis von 1:4 bei der akustischen Ausgangsspannung ohne Ausgangsinduktivität L_{DRV} zu dem Pegel mit Ausgangsinduktivität L_{DRV}.

### Bezugszeichenliste

- AMP: Empfangsverstärker
- BPF: Bandpass
- C: Treiberkapazität
- C_{AING}: Koppelkapazität für den negativen Pol des Empfangssignals
- C_{AINS}: Koppelkapazität für den positiven Pol des Empfangssignals
- C_{bat}: Stützkondensator für die Betriebsspannung (V_{bat})
- C_{DRV}: Treiberausgangskapazität
- C_{EMC}: Hilfskapazität
- Cₘ: Ausgang der rechten Halbbrücke (T₃, T₄)
- Cₚ: Ausgang der linken Halbbrücke (T₁, T₂)
- C_{TR}: Transducer-Kapazität
- C_{TRp}: Parallelkapazität im Ersatzschaltbild (Fig. 2) des Transducers (TR)
- C_{TRs}: Serienkapazität im Ersatzschaltbild (Fig. 2) des Transducers (TR)
- DRV: Treiberausgang
- GND: Bezugspotenzial
- L_{DRV}: zusätzliche (Treiber-)Ausgangsinduktivität zur Einstellung des kritischen Resonanzfalles des schwingfähigen Systems vierter Ordnung aus Transducer-Kapazität (C_{TR}), Transducer (TR), ohmschen Ausgangswiderstand (R_{DRV}) und Ausgangsinduktivität (L_{DRV})
- L_{TRs}: Serieninduktivität im Ersatzschaltbild (Fig. 2) des Transducers (TR)
- R_{DRV}: ohmscher (Treiber-)Ausgangswiderstand der Treiberschaltung zur Einstellung der Bandbreite;
- R_{TRs}: Serienwiderstand im Ersatzschaltbild (Fig. 2) des Transducers (TR)
- t: Zeit
- T₁: erster Transistor (High-Side-Transistor) der linken Halbbrücke (T₁, T₂) zwischen der Betriebsspannung (V_{bat}) und dem Bezugspotenzial (GND) mit Ausgang Cₚ
- T₂: zweiter Transistor (Low-Side-Transistor) der linken Halbbrücke (T₁, T₂)
- T₃: dritter Transistor (High-Side-Transistor) der rechten Halbbrücke (T₃, T₄) zwischen dem Treiberausgang (DRV) und dem Bezugspotenzial (GND) mit Ausgang Cₘ
- T₄: vierter Transistor (Low-Side-Transistor) der rechten Halbbrücke (T₃, T₄) zwischen dem Treiberausgang (DRV) und dem Bezugspotenzial (GND) mit Ausgang Cₘ
- T₅: fünfter Transistor der Treiberschaltung
- TR: Transducer
- TR-: negativer Anschluss des Transducers (TR) an dem Bezugspotenzial (GND). Der Begriff "negativ" ist nur zu Bezeichnungszwecken gewählt, um den Anschluss vom anderen Anschluss, dem positiven Transducer-Anschluss (TR+) eindeutig zu unterscheiden
- TR+: positiver Anschluss des Transducers (TR) an den Treiberausgang (DRV) über den Treiberausgangswiderstand (R_{DRV}) und die Ausgangsinduktivität (L_{DRV}). Der Begriff "positiv" ist nur zu Bezeichnungszwecken gewählt, um den Anschluss vom anderen Anschluss, dem negativen Transducer-Anschluss(TR-) eindeutig zu unterscheiden
- TS: Treiberstufe
- V_{bat}: Betriebsspannung
- V_{batw}: Wechselspannung als Ersatz für die Betriebsspannung (V_{bat})
- V_{SS}: Spitze-zu-Spitze-Wert der Spannung zwischen dem positiven Transducer-Anschluss (TR+) des Transducers (TR) und dem negativen Transducer-Anschluss (TR-) des Transducers (TR)
- Z_{DRV}: Treiberausgangsimpedanz
- Z'_{DRV}: Treiberausgangsimpedanz (Z_{DRV}) inklusive Innenwiderstand der Treiberstufe (TS)
- Z_{TRs}: Treiberimpedanz

## Patentansprüche

1. Einrichtung mit
- einem übertragerfreien Ultraschall-Transducer (TR), dessen Ersatzschaltbild eine Serienschaltung aus einer Serieninduktivität (L_{TRs}) und einer Serienkapazität (C_{TRs}) und eine zur Serienschaltung parallel geschaltete Parallelkapazität (C_{TRp}) aufweist, und
- einer Vorrichtung zum Betreiben des übertragerfreien Ultraschall-Transducers (TR), die versehen ist mit
- einer Ansteuerschaltung (TS, C_{bat}, T₁, T₂, T₃, T₄, T₅), die einen ersten Ausgangsanschluss (GND) und einen zweiten Ausgangsanschluss (DRV) aufweist,
- einem Treiberausgangswiderstand (R_{DRV}), der teilweise durch den Ausgangswiderstand der Ansteuerschaltung (TS, C_{bat}, T₁, T₂, T₃, T₄, T₅) an ihrem zweiten Ausgang (DRV) und/oder einen zusätzlichen Treiberausgangswiderstand, der in Serie zu ihrem zweiten Ausgang geschaltet ist, gebildet wird und
- wobei der Treiberausgangswiderstand (R_{DRV}) wirkmäßig zwischen einem positiven Anschluss (TR+) für den Transducer (TR) und dem zweiten Ausgangsanschluss (DRV) der Ansteuerschaltung (TS, C_{bat}, T₁, T₂, T₃, T₄, T₅) geschaltet ist, und
- wobei ein negativer Anschluss (TR-) für den Transducer (TR) mit dem ersten Ausgangsanschluss (GND) der Ansteuerschaltung (TS, C_{bat}, T₁, T₂, T₃, T₄, T₅) verbunden ist, und
- einer Transducer-Kapazität (C_{TR}), die zwischen dem positiven Anschluss (TR+) und dem negativen Anschluss (TR-) für den Transducer (TR) geschaltet ist,
**gekennzeichnet durch,**
- eine den Treiberausgangswiderstand (R_{DRV}) aufweisende Treiberausgangsimpedanz (Z_{DRV}), die wirkmäßig zwischen dem positiven Anschluss (TR+) des Transducers (TR) und dem zweiten Ausgangsanschluss (DRV) der Ansteuerschaltung (TS, C_{bat}, T₁, T₂, T₃, T₄, T₅) geschaltet ist,
- wobei die Treiberausgangsimpedanz (Z_{DRV}) neben dem Treiberausgangswiderstand (R_{DRV}) auch eine Treiberausgangsinduktivität (L_{DRV}) aufweist und
- wobei der Wert der Treiberausgangsinduktivität (L_{DRV}) so bemessen ist, dass
- ein erster Serienschwingkreis aus der Serieninduktivität (L_{TRs}) und der Serienkapazität (C_{TRs}) des Ersatzschaltbilds des Transducers (TR) und
- ein zweiter Serienschwingkreis aus der Treiberausgangsinduktivität (L_{DRV}) und der Parallelschaltung aus Transducer-Kapazität (C_{TR}) und Parallelkapazität (C_{TRp}) des Ersatzschaltbilds des Transducers (TR) kritisch gekoppelt sind.

2. Einrichtung nach Anspruch 1, **dadurch gekennzeichnet, dass** die Treiberausgangsimpedanz (Z_{DRV}) auch eine Treiberausgangskapazität (C_{DRV}) aufweist.

3. Verwendung der Einrichtung nach Anspruch 1, **dadurch gekennzeichnet, dass** der Transducer (TR) nach dem Ende einer Ansteuerphase mit einer Wechselspannung zwischen dem positiven Anschluss (TR+) des Transducers (TR) und dem negativen Anschluss (TR-) des Transducers (TR) betrieben wird, die einen Spitze-zu-Spitze-Wert aufweist, der zu Beginn der Ausschwingphase des Transducers (TR) betragsmäßig mehr als das Doppelte des Betrags der Betriebsspannung (V_{bat}) der Vorrichtung zum Betreiben des Transduchers (TR) beträgt.

## Claims

1. An apparatus, comprising:
- a transformerless ultrasonic transducer (TR), the equivalent circuit diagram of which has a series circuit consisting of a series inductance (L_{TRs}) and a series capacitance (C_{TRs}) and a parallel capacitance (C_{TRp}) connected in parallel with the series circuit, and
- a device for operating the transformerless ultrasonic transducer (TR), which is provided with
- a control circuit (TS, C_{bat}, T₁, T₂, T₃, T₄, T₅) having a first output terminal (GND) and a second output terminal (DRV),
- a driver output resistor (R_{DRV}) formed in part by the output resistance of the control circuit (TS, C_{bat}, T₁, T₂, T₃, T₄, T₅) at its second output (DRV) and/or an additional driver output resistor connected in series with its second output, and
- wherein the driver output resistor (R_{DRV}) is operatively connected between a positive terminal (TR+) for the transducer (TR) and the second output terminal (DRV) of the control circuit (TS, C_{bat}, T₁, T₂, T₃, T₄, T₅), and
- wherein a negative terminal (TR-) for the transducer (TR) is connected to the first output terminal (GND) of the control circuit (TS, C_{bat}, T₁, T₂, T₃, T₄, T₅), and
- a transducer capacitance (C_{TR}) connected between the positive terminal (TR+) and the negative terminal (TR-) for the transducer (TR),
**characterized by**
- a driver output impedance (Z_{DRV}) comprising the driver output resistor (R_{DRV}), which is effectively connected between the positive terminal (TR+) of the transducer (TR) and the second output terminal (DRV) of the control circuit (TS, C_{bat}, T₁, T₂, T₃, T₄, T₅),
- wherein the driver output impedance (Z_{DRV}) also has a driver output inductance (L_{DRV}) in addition to the driver output resistance (R_{DRV}), and
- where the value of the driver output inductance (L_{DRV}) is dimensioned so that
- a first series resonant circuit from the series inductance (L_{TRs}) and the series capacitance (C_{TRs}) of the equivalent circuit diagram of the transducer (TR) and
- a second series resonant circuit consisting of the driver output inductance (L_{DRV}) and the parallel circuit consisting of transducer capacitance (C_{TR}) and parallel capacitance (C_{TRp}) of the equivalent circuit diagram of the transducer (TR) are critically coupled.

2. The device according to claim 1, **characterized in that** the driver output impedance (Z_{DRV}) also has a driver output capacitance (C_{DRV}).

3. Use of the apparatus according to claim 1, **characterized in that** the transducer (TR) is operated after the end of a control phase with an AC voltage between the positive terminal (TR+) of the transducer (TR) and the negative terminal (TR-) of the transducer (TR) which has a peak-to-peak value which, at the beginning of the decay phase of the transducer (TR), is more than twice the magnitude of the operating voltage (V_{bat}) of the device for operating the transducer (TR).

## Revendications

1. Dispositif comprenant
- un transducteur à ultrasons (TR) sans transformateur, dont le circuit équivalent présente un montage en série composé d'une inductance série (L_{TRs}) et d'une capacité série (C_{TRs}), et une capacité parallèle (C_{TRp}) connectée en parallèle au montage en série, et
- un dispositif permettant de faire fonctionner le transducteur à ultrasons (TR) sans transformateur, qui est muni de
- un circuit de commande (TS, C_{bat}, T₁, T₂, T₃, T₄, T₅) présentant une première borne de sortie (GND) et une seconde borne de sortie (DRV),
- une résistance de sortie de pilotage (R_{DRV}) formée en partie par la résistance de sortie du circuit de commande (TS, C_{bat}, T₁, T ₂, T₃, T ₄, T₅) au niveau de sa seconde sortie (DRV) et/ou par une résistance de sortie de pilotage supplémentaire connectée en série à sa seconde sortie, et
- dans lequel la résistance de sortie de pilotage (R_{DRV}) est connectée en fonctionnement entre une borne positive (TR+) du transducteur (TR) et la seconde borne de sortie (DRV) du circuit de commande (TS, C_{bat}, T₁, T₂, T ₃, T₄, T₅), et
- dans lequel une borne négative (TR-) du transducteur (TR) est connectée à la première borne de sortie (GND) du circuit de commande (TS, C_{bat}, T₁, T ₂, T₃, T₄, T₅), et
- une capacité de transducteur (C_{TR}) connectée entre la borne positive (TR+) et la borne négative (TR-) du transducteur (TR),
**caractérisé par** :
- une impédance de sortie de pilotage (Z_{DRV}) présentant la résistance de sortie de pilotage (R_{DRV}), qui est connectée en fonctionnement entre la borne positive (TR+) du transducteur (TR) et la seconde borne de sortie (DRV) du circuit de commande (TS, C_{bat}, T₁, T ₂, T₃, T ₄, T₅),
- dans lequel l'impédance de sortie de pilotage (Z_{DRV}) présente, en plus de la résistance de sortie de pilotage (R_{DRV}), également une inductance de sortie de pilotage (L_{DRV}) et
- dans lequel la valeur de l'inductance de sortie de pilotage (L_{DRV}) est telle que
- un premier circuit oscillant série constitué de l'inductance série (L_{TRs}) et de la capacité série (C_{TRs}) du circuit équivalent du transducteur (TR) et
- un second circuit oscillant série constitué de l'inductance de sortie de pilotage (L_{DRV}) et du circuit parallèle constitué de la capacité de transducteur (C_{TR}) et de la capacité parallèle (C_{TRp}) du circuit équivalent du transducteur (TR)
sont à couplage critique.

2. Dispositif selon la revendication 1, **caractérisé en ce que** l'impédance de sortie de pilotage (Z_{DRV}) présente également une capacité de sortie de pilotage (C_{DRV}).

3. Utilisation du dispositif selon la revendication 1, **caractérisée en ce que**, après la fin d'une phase de commande, le transducteur (TR) est exploité, entre la borne positive (TR+) du transducteur (TR) et la borne négative (TR-) du transducteur (TR), avec une tension alternative qui présente, au début de la phase d'oscillation du transducteur (TR), une valeur de crête à crête qui est supérieure au double de la valeur de la tension de service (V_{bat}) du dispositif permettant de faire fonctionner le transducteur (TR).
